# EUROPEAN PATENT SPECIFICATION

(11) **EP 0 961 219 B1**
(45) Date of publication and mention of the grant of the patent: **11.04.2001**
(21) Application number: 99108985.5
(22) Date of filing: 06.05.1999
(51) Int. Cl.: G06K 13/08, G06K 7/00, B65H 1/06

(54) **Apparatus for processing ic cards**
Gerät zur Handhabung von Halbleiterkarten
Appareil de manipulation pour des cartes à circuit intégré

(30) Priority: 28.05.1998 JP 18679598; 18.12.1998 JP 37814898
(43) Date of publication of application: 01.12.1999
(73) Proprietor: ASAHI SEIKO KABUSHIKI KAISHA, Minato-ku, Tokyo 107-0062 (JP)
(72) Inventor: Eason, Michael, Tunbridge Wells, Kent TN4 8AS (GB); McBeath, Robert, Tunbridge Wells, Kent TN4 8AS (GB)
(74) Representative: Prüfer, Lutz H., Dipl.-Phys.

(56) References cited:
- EP-A- 0 311 119
- EP-A- 0 429 976
- EP-A- 0 528 275
- EP-A- 0 774 732

## Description

This invention relates to an apparatus for processing IC cards which embed a thin integrated circuit chip, i.e. an IC chip, according to the preamble of claim 1.

Especially this invention relates to an apparatus for processing IC cards which are used for fee payment in game arcades, etc., for fare payment of electric trains, or for automatic vending machines of goods, and the like. In other words, this invention relates to an apparatus for processing and issuing or re-issuing IC cards, which is suitably installed in the machine for selling the IC cards automatically.

Until now, various apparatuses for selling cards have been developed. For example, the applicant's Japanese utility model application 63-60147 discloses a card-sending-out apparatus suitable for a card vending machine. This application is published as Japanese utility model publication 7-26276, and it is further registered as the United States patent 4,993,587.

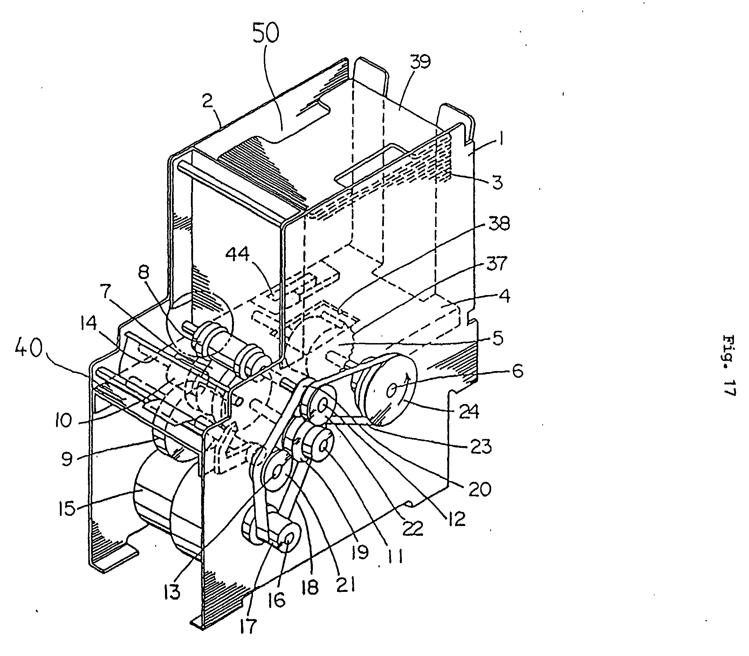

The card-sending-out apparatus has an accommodation chamber 50 for accommodating a multilayer stack 3 of cards, as shown in Fig. 17. The sending-out apparatus is provided with a supporting plate 4. This supports the multilayer body 3 of cards from below. The sending-out apparatus is provided with a drawing roller 5 for cards below the supporting plate 4. The card-sending-out rollers 7 and 9 are provided between the drawing roller 5 and a card-sending-out opening 40.

A card, which is drawn out from below the card multilayer stack 3 by the drawing roller 5, is sent to the exit 40 with the sending-out rollers 7 and 9. The apparatus further has a roller 8, which is provided above the sending-out roller 7, and the roller 8 rotates in the reverse direction against the card-sending-out direction and prevents that two cards are sent out. The gap between rollers 7 and 8 is defined for passing only one card which was drawn out by the drawing roller 5. When a card is blocked between rollers 7 and 8, the card is detected by a sensor (not shown ) and a reverse rotation of drawing roller 5 is performed. If the drawing roller 5 is rotated in the reverse direction, the roller 8 for preventing the sending-out of two cards, which is interlocked with the roller 5, is also rotated in the reverse direction. However, since the mechanism of roller 8 is provided with a clutch structure, the start of the reverse rotation of the roller 8 is delayed for a while from the start of the reverse rotation of drawing roller 5. Therefore, the card, which is blocked between roller 7 and 8, is returned in the reverse direction against the sending-out direction.

Shown in Fig. 17 are sideboards 1, 2, which form the card accommodation chamber 50, a drive shaft 6 of drawing roller 5, a card discharge roller 9, a shaft 11 of roller 7, a shaft 12 of roller 8 for the reverse rotation, a shaft 13 of discharge roller 9, a shaft 14 of an assistance roller 10, an electric motor 15 for driving, a shaft 16 of motor 15, pulleys 17, 19, 20, 21, 22 and 24, belts 18 and 23, a protrusion 37 of drawing roller 5, a window 38, which is opened a the supporting plate 4, a weight 39 for cards, and an arm 44 of a detection switch.

The above-mentioned card-sending-out apparatus is provided only with a function, which reliably draws cards one by one from the bottom position of a stack of cards. However, an IC card, which has a build-in IC chip, provides a super-small computer and memory. EP-A-0 429 976 discloses an apparatus according to the preamble of claim 1.

EP-A-0 311 119 discloses an apparatus for processing IC cards, comprising an opening means for receiving or discharging the IC card, a connector means for connecting the IC card to perform a data processing for the IC card, and a transfer means which is provided between the opening means and the connector means for transferring the IC card from the opening means to the connector means and from the connector means to the opening means.

EP-A-0 774 732 discloses an apparatus for processing IC cards, comprising at least an opening means for discharging the IC card, a connector means for connecting the IC card to perform a data processing for the IC card, and a transfer means which is provided between the opening means and the connector means and which comprises two rollers pressed to each other for transferring the IC card from the connector means to the opening means.

It is object of this invention to offer an improved apparatus which can perform a data processing for IC cards and which can collect an IC card which could not be processed by the apparatus.

The object is achieved by the apparatus according to claim 1.

Further developments of the invention are given in the dependent claims.

The apparatus can issue or re-issue IC cards. Further, the apparatus can perform data processing for IC cards inserted from the exterior into the apparatus or drawn from a stack and can issue the IC card to the exterior of the apparatus again or for the first time.

It is provided an apparatus, which pulls out a blank IC card without data from a stack or accepts an inserted IC card and writes data in this IC card for selling, for example an apparatus for encoding an IC card via communication means and selling the IC card.

It is also provided an apparatus suitable for processing IC cards to treat the IC cards like cash, specifically, an apparatus for IC cards suitable for performing various payments using IC cards on which data of a money amount were written. In other words, it is provided an issue machine which can write data into an IC card without data or an inserted IC card including stored data and can issue or re-issue the IC card.

Hereinafter, embodiments of this invention are explained referring to the attached drawings, of which:
- Fig. 1: is a sketchy perspective view showing a first embodiment according to this invention.
- Fig. 2: is a sketchy perspective view of the embodiment of Fig. 1, where a part is removed.
- Fig. 3: is a sketchy perspective view of the embodiment of Fig. 1, where principle parts of Fig. 1 are extracted.
- Fig. 4: is perspective view, which shows partially enlarged principle parts of Fig. 2.
- Fig. 5: is a plan view and a side sectional view, which show partially a use condition of the parts of Fig. 4.
- Fig. 6: is an explanatory view for explaining an operation of the embodiment of Fig. 1.
- Fig. 7: is an explanatory view for explaining an operation of the embodiment of Fig. 1.
- Fig. 8: is an explanatory view for explaining an operation of the embodiment of Fig. 1.
- Fig. 9 (A), (B): are explanatory views for explaining an ope ration of the embodiment of Fig. 1.
- Fig. 10: is an explanatory view for explaining an operation of the embodiment of Fig. 1.
- Fig. 11: is an explanatory view for explaining an operation of the embodiment of Fig. 1.
- Fig. 12: is an explanatory view for explaining an operation of the embodiment of Fig. 1.
- Fig. 13 (A) , (B): are explanatory views for explaining an operation of the embodiment of Fig. 1.
- Fig. 14 (A), (B): are explanatory views for explaining an operation of the embodiment of Fig. 1.
- Fig. 15 (A), (B): are explanatory views for explaining an operation of the embodiment of Fig. 1.
- Fig. 16: is an explanatory view for explaining an operation of the embodiment of Fig. 1.
- Fig. 17: is a schematic perspective view showing a prior art apparatus.
- Fig. 18: is a block circuit diagram for explaining an operation of the embodiment of Fig. 1.
- Fig. 19: is a flowchart for explaining an operation of the embodiment of Fig. 1.
- Fig. 20: is a flowchart for explaining another operation of the embodiment of Fig. 1.
- Fig. 21: is a sketchy perspective view showing a second embodiment according to this invention.
- Fig. 22: is a sketchy perspective view of the embodiment of Fig. 21, where a part is removed.
- Fig. 23 (A), (B): are sketchy perspective views of the embodiment of Fig. 21, where a principle part of Fig. 22 is extracted.
- Fig. 24: is a sketchy view of the embodiment of Fig. 21, where principle parts of Fig. 21 are extracted.
- Fig. 25: is a block circuit diagram of the embodiment of Fig. 21.
- Fig. 26: is a flowchart for explaining an operation of the second embodiment.
- Fig. 27: is also a flowchart for explaining an operation of the second embodiment.

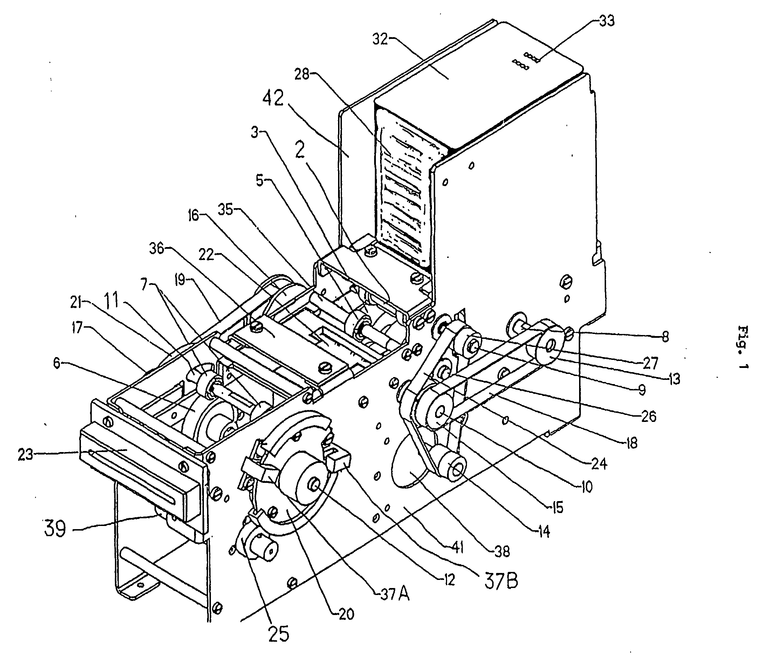

A first embodiment is explained referring to Fig. 1 to 20.

Referring to Fig. 1, a pair of large L-shaped boards are sideboards 41 and 42, respectively, which comprise the apparatus. In the upper-right part between the sideboards 41 and 42 a stack 28 is holded, which consists of stacked IC cards 32. Each of the IC cards 32 embeds a thin integrated circuit chip (not shown), i.e. an IC chip, in the proper place. Pads 33 for IC chip connection are formed on the surface of the IC card 32. In this case, the number of pads 33 is eight, but any other number such as six or others is possible.

A motor 38 for drawing IC cards 32 is built-in in a central position between sideboards 41, 42. On the rotating shaft of motor 38 a pulley 14 is installed.

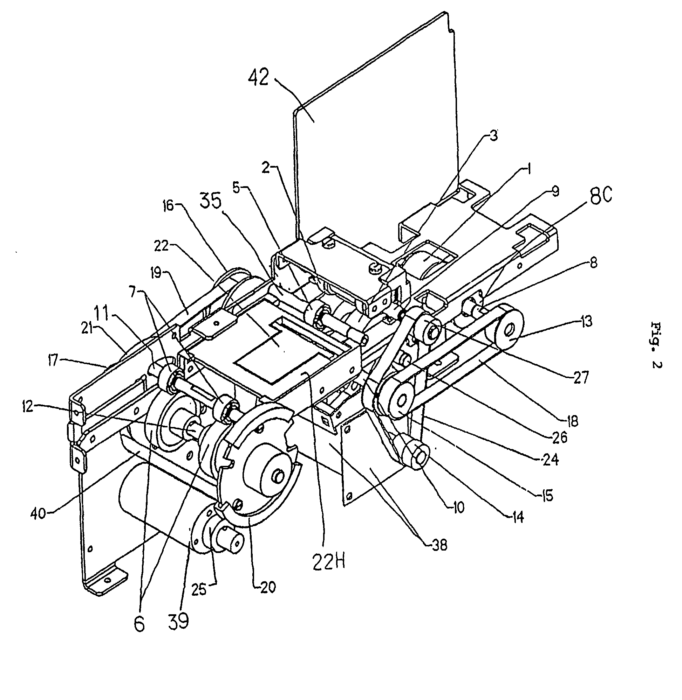

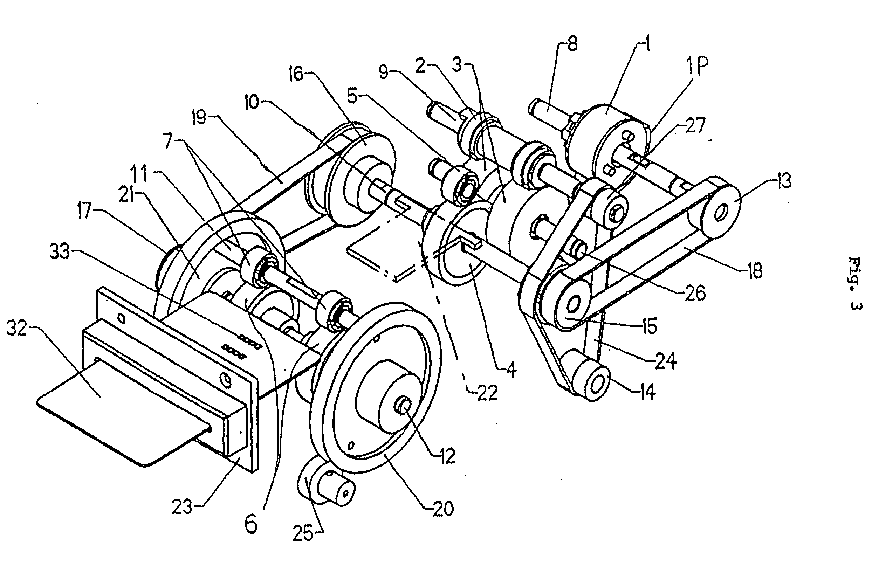

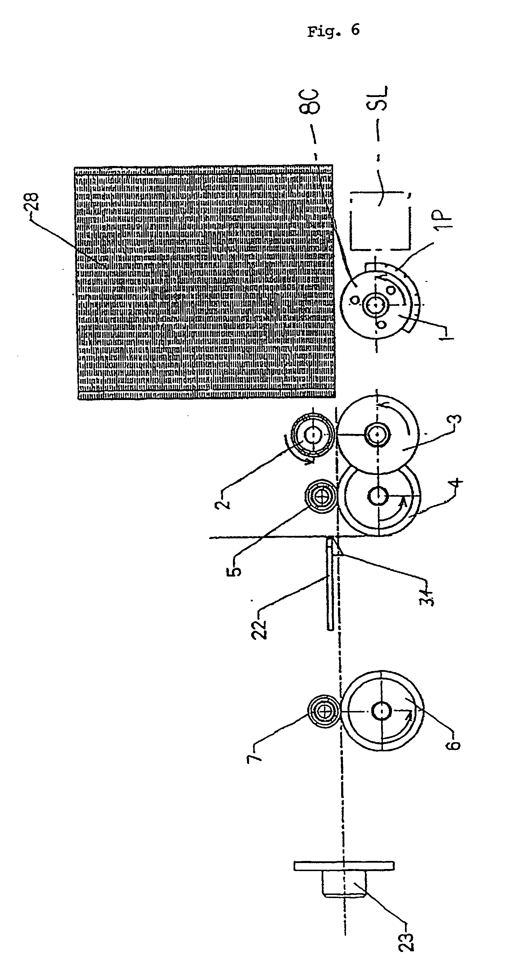

Referring to Fig. 2, a roller 1 is rotatably installed on a shaft 8 and has a clutch mechanism. A clutch 8C (see Fig. 2) is attached to the shaft 8, and the clutch 8C performs the same movement as shaft 8. In addition, clutch 8C is coupled to roller 1 by means of a solenoid SL (refer to Fig. 6) via an arm (not shown). Moreover, a pulley 13 is installed on the end part of shaft 8. In order to send out or transport an IC card 32 draw out under stack 28, a pair of rollers 3 are arranged near the roller 1 (refer to Fig. 3). The rollers 3 for sending or transporting a drawn IC card 32 are rotatably attached to the apparatus via a shaft 26. Above the sending rollers 3, rollers 2, which prevent that two sheets of IC cards 32 are send out, are attached via a shaft 9. A pulley 27 is installed at the edge part of shaft 9.

A roller 4 for drawing (refer to Fig. 3) an IC card is arranged between the pair of sending rollers 3. The roller 4 is arranged in the apparatus via a longitudinal shaft 10. A pulley 15 with a step is installed at one end part of shaft 10. A little larger pulley 16 is installed at the other end part of shaft 10. Above the drawing roller 4 for IC cards, an idler 5 for pressing the IC card is arranged rotatably. The idler 5 is attached to the apparatus via a shaft 35. In addition, a belt 24 spans the pulley 14 with motor 18, which is a drive source, the two-steps-type pulley 15 and the pulley 27 for reverse rotations. Moreover, a belt 18 spans pulleys 15 and 13.

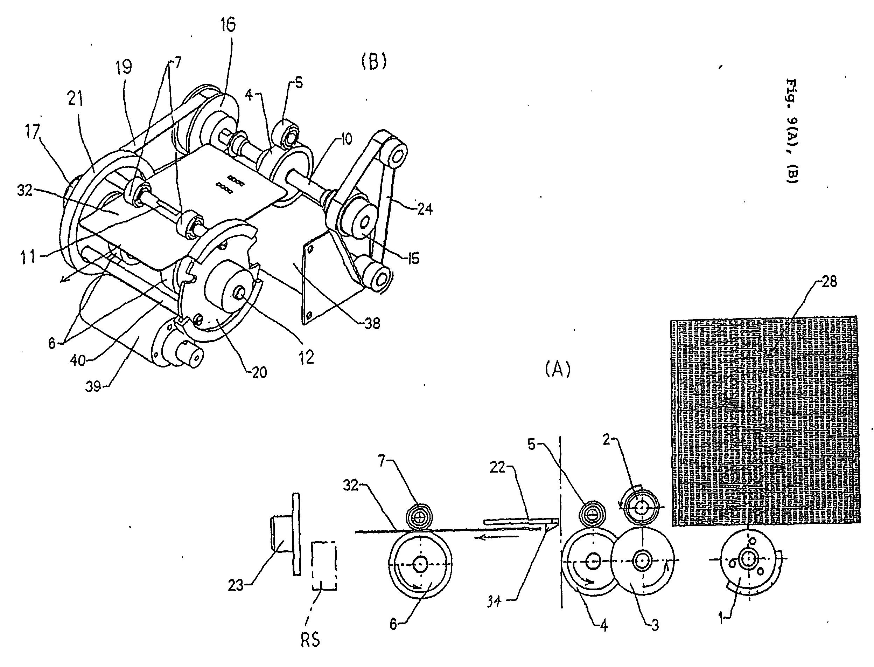

Referring to Fig. 3, a belt 19 spans pulley 17 and 16 (refer to Fig. 9(B)). The pulley 17 is installed at the end part of a longitudinal shaft 12. A pair of rollers 6 for moving an IC card 32 are installed on the central part of the little longitudinal shaft. Moreover, at the end part 21 of longitudinal shaft 12, i.e. at the side of pulley 17, a hub with a large diameter is installed rotatably. Furthermore, a large gear 20 with a large diameter is rotatably installed at the other end part of longitudinal shaft 12. In addition, the pair of hub 21 and gear 20 are respectively arranged on the exterior of the sideboards 41 and 42 (refer to Fig. 1). Moreover, a shaft 11 is fixed between hub 21 and gear 20. A pair of idler 7, which press the pair of rollers 6, is rotatably installed at the shaft 11.

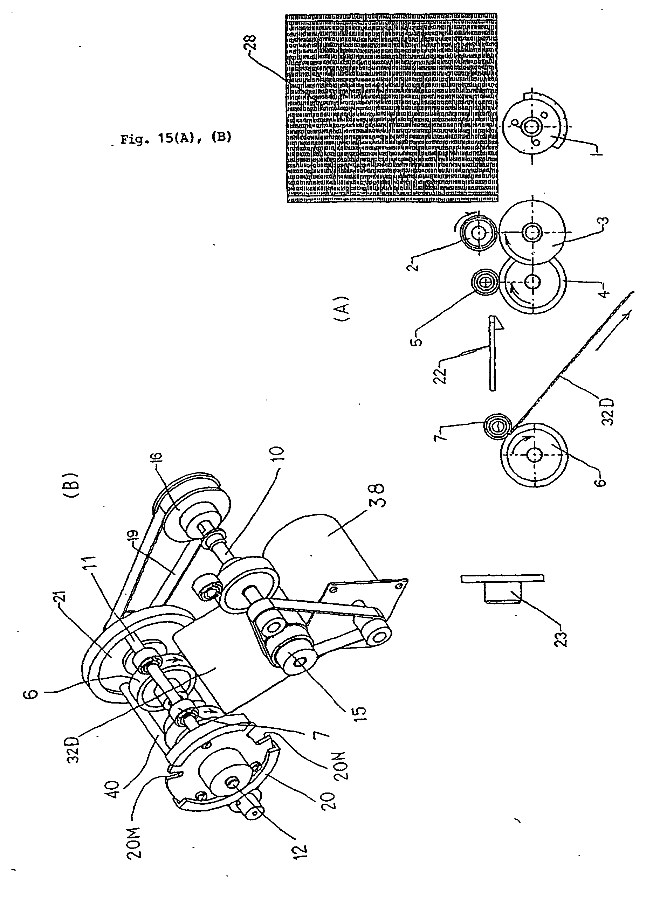

Referring to Fig. 2, a motor 39 is a drive source for collecting IC cards 32 with inferior quality, for example, inside the apparatus. A pinion 25 is installed on the rotating shaft of motor 39. The pinion 25 meshes with the large gear 20. In addition, in Fig. 1, a receptacle frame 23 guides an IC card 32 to be issued out of the apparatus or inserted into the apparatus. Moreover, rods 44 for coupling reinforce the bond of hub 21 and gear 20 (refer to Fig. 15(B)).

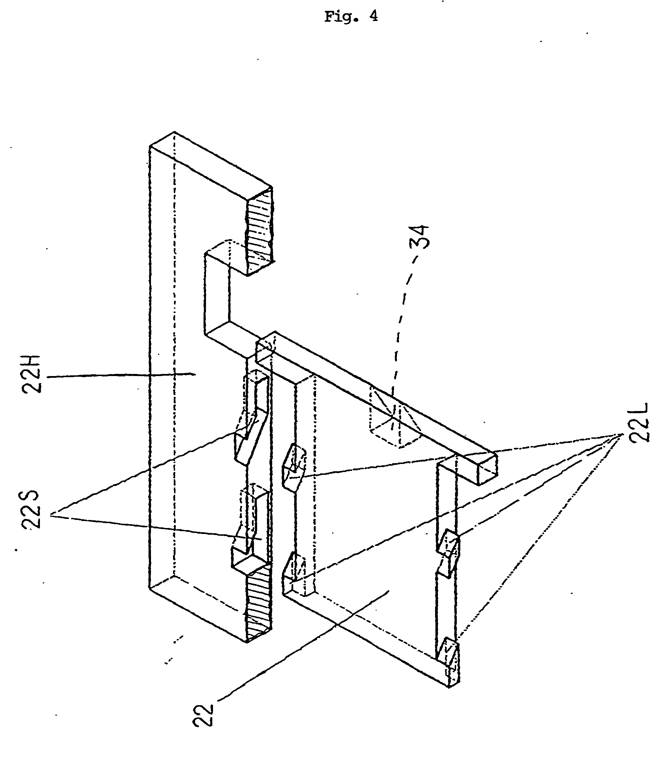

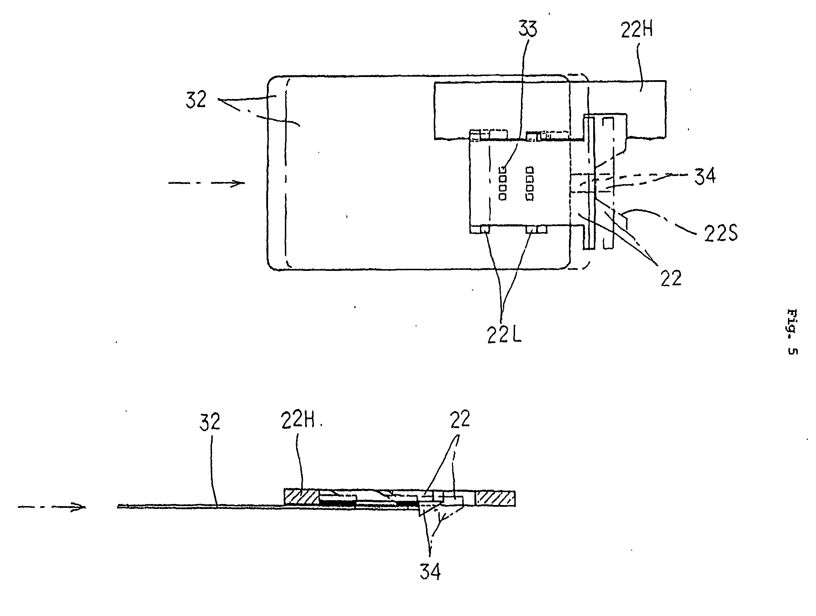

The T-shaped member in the center of Fig. 2 is a connector 22 for the IC card 32. The connector 22 is contained slidably in the horizontal direction in a housing 22H with a substantially square-ring shape (refer to Fig. 5). The connector 22 has a plurality of protrusions 22L with the shape of a small rhombus on both sides, as shown enlarged in Fig. 4. At the center of the rear edge (if seen in transport direction) on the under surface of connector 22, a small hook 34 with a triangle shape is formed. The hook 34 catches the edge of IC. cards 32, if the same is moved opposite to the transport direction, as shown in Fig. 5.

At the undersurface of connector 22, a plurality of contacts (not shown) are arranged.

In Fig. 4, a part of housing 22H is shown enlarged. On both sides of the housing 22H with a square-ring shape a plurality of inclined slots 22S are formed. These slots 22S contain slidably the rhombus-like protrusion 22L. Further, shown in the center of Fig. 1 is a circuit board 36 for the connector 22.

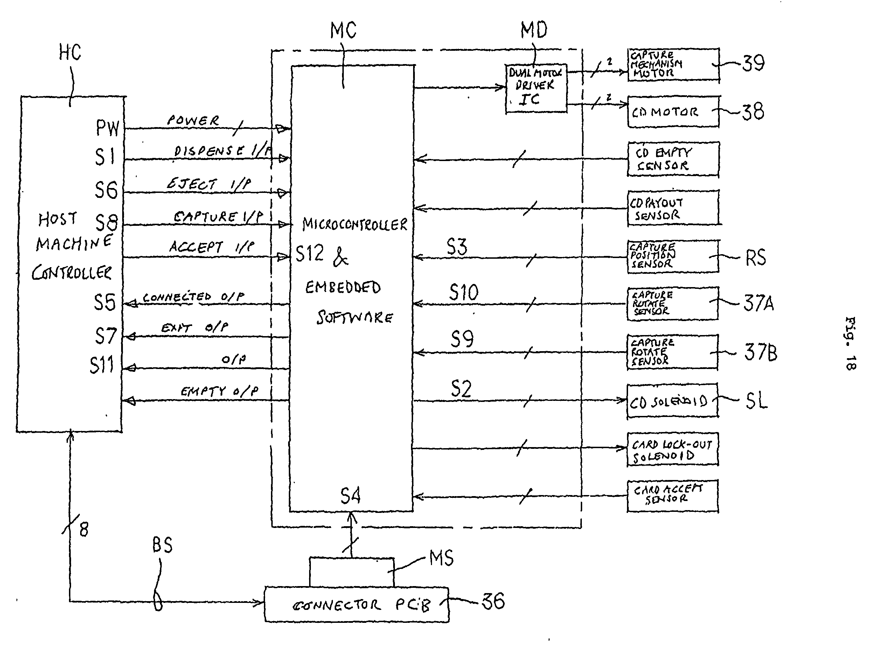

Fig. 18 is a block circuit diagram of this embodiment, which is explained here in a schematic manner. There are shown, in the left of Fig. 18, a controller HC for a host machine (not shown), in the center of Fig. 18, a controller MC of the apparatus, and in addition a drive circuit MD for controlling the forward and reverse rotations of motors 38 and 39, respectively. If a drawing signal S1 for drawing an IC card 32 is outputted from the host controller HC, motor 38 will be rotated in forward direction via controller MC and drive circuit MD. If motor 38 rotates forwardly, pulley 14 will be rotated and belt 24 will be actuated and pulley 15 is rotated. Furthermore, pulley 13 is rotated via belt 18. Shaft 8 is rotated. If solenoid SL is switched on with a discharge signal S2, roller 1 will be rotated by means of clutch 8C (refer to Fig. 6). Consequently, the IC card 32 at the bottom of stack 28 is drawn out by convex-part 1P of drawing roller 1.

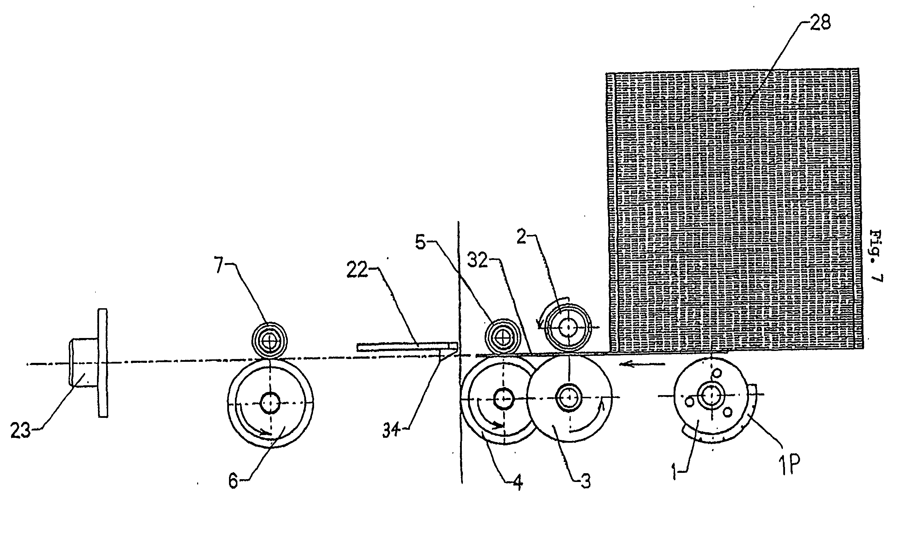

As shown in Fig. 7, the front end of IC card 32, which is drawn out by convex-part 1P, is sent between rollers 2 and 3 and passes through between these rollers. At this time, the reverse rotation of roller 2 is performed. For this reason, a sending of two sheets of IC cards 32 is prevented. Furthermore, the front end of IC card 32 sent out is picked up by rotating roller 4 and idler 5. The IC card is sent in the direction toward connector 22.

At this time, solenoid SL is turned OFF and clutch 8C is detached. As the result, roller 1 is not rotated although shaft 8 is rotated (refer to Fig. 7). In this way, the front end of IC card 32 sent or transported by roller 4 and idler 5 hits the hook 34 of connector 22.

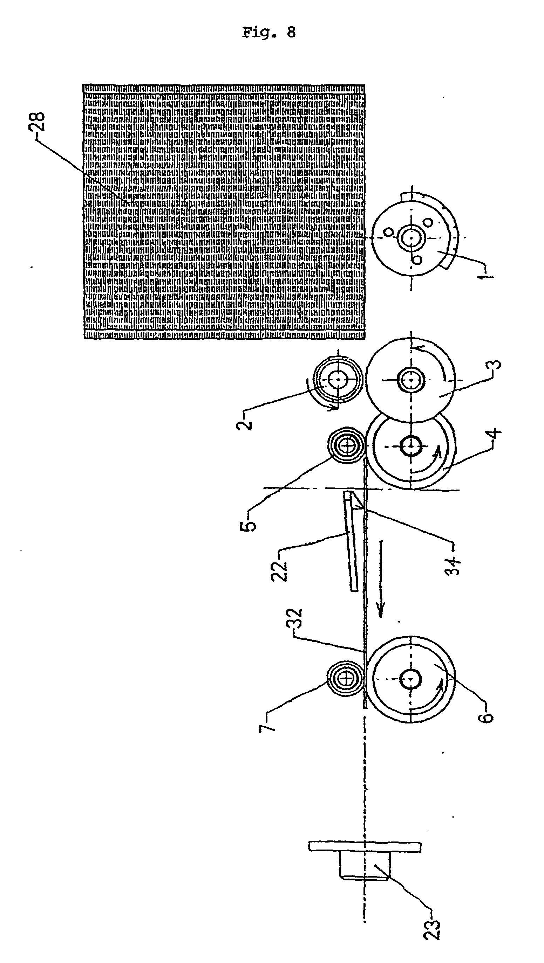

At this time, as shown clearly in Figs. 4 and 5, hook part 34 of connector 22 is moved up a little bit (refer to Fig. 8). Therefore, IC card 32 can progress. A picking up of the front end of IC card 32 is performed by rollers 6 and idlers 7, which are rotated. The IC card 32, which was picked up, is sent out in the direction toward receive frame 23 only by rollers 6 and idlers 7 (refer to Fig. 9(A) and (B)). IC card 32 is completely separated from hook 34. When the front end is detected by sensor RS of the reflecting type, motor 38 will perform a reverse rotation on instruction via a signal S3.

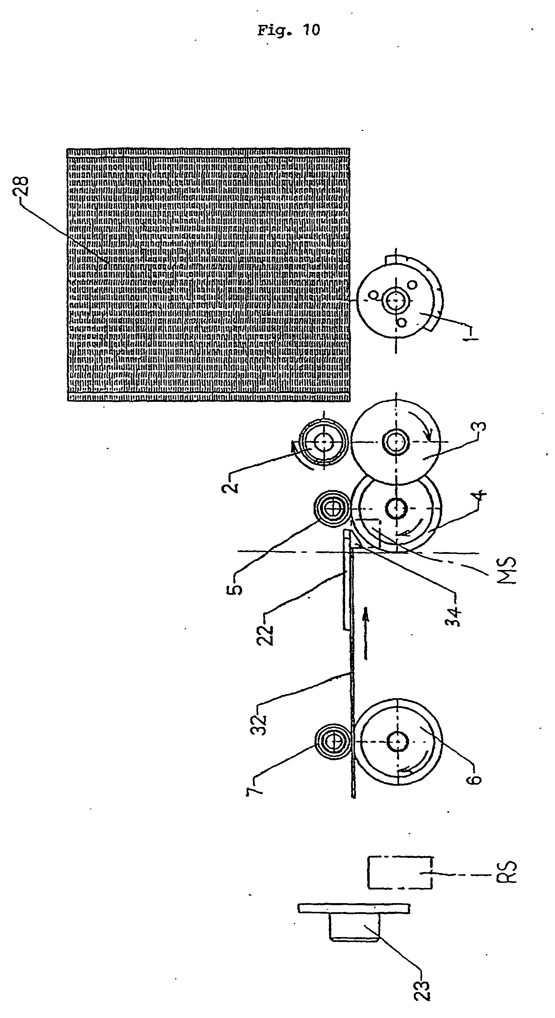

Reverse rotations of roller 6 and idlers 7 are caused by the reverse rotation of motor 38. IC card 32 is returned in the direction toward hook 34 (refer to Fig. 10). When the end of IC card 32, which is returned in the direction toward hook 34, strikes hook 34 and is caught, connector 22 is moved in the direction of a lowering diagonal, as shown in Fig. 5. Therefore, the pads 33 of IC card 32 contact with the contacts (not shown) of connector 22. Almost simultaneously, the leading edge, seen in the direction of movement, of connector 22 switches ON a mechanical type switch MS.

If the switch MS is turned ON, a signal S4 will be sent to the apparatus controller MC. The controller MC sends the connection signal S5 to host controller HC. When it is checked by signal S4 that the pads 33 of IC card 32 have been connected to the contacts of connector 22 the rotation of rollers 6, i.e. of the motor 38 is stopped. In this way, the IC card 32 rests still in the condition of being connected with the connector 22.

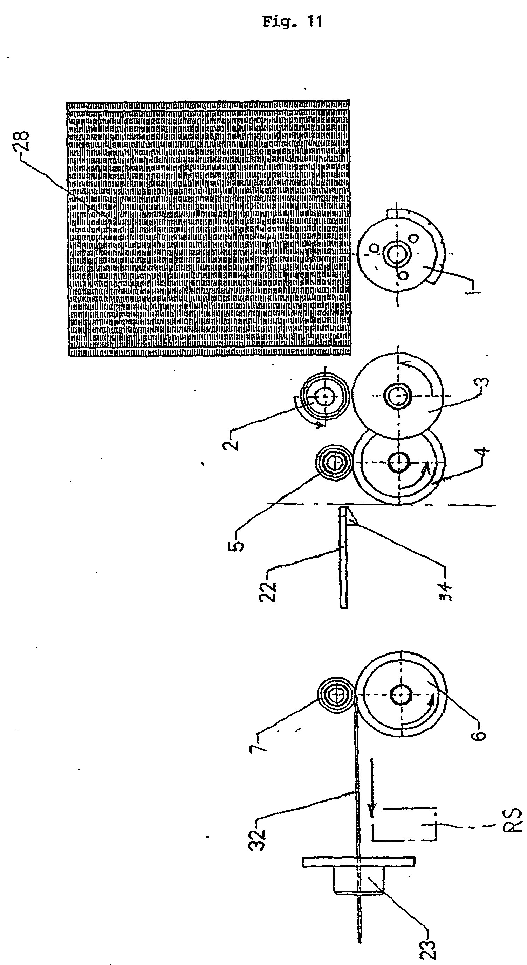

The data processing for IC card 32 is performed in this rest condition. That is, via an 8-bit bus BS, the host controller HC performs a data writing and/or reading on the chip (not shown) in IC card 32. When the data communication of the host controller HC and the IC card 32 is completed, an issue signal S6 from controller HC is sent to controller MC. If the issue signal S6 is sent, the controller MC will cause the motor 38 to rotate forwardly via the drive circuit MD. In this way, the IC card 32 is sent in the direction toward receptacle frame 23 by rollers 6 and idlers 7 (refer to Fig. 11). At this time connector 22 is returned to the original position by a spring 22S (refer to Fig. 5) having substantially a V shape.

As shown in Fig. 11, IC card 32 reaches the receptacle frame 23. The preparation for an extraction by hand is completed. The sensor RS detects a moving of IC card 32 at this time. A change of a detecting signal S3 of sensor RS is sent to apparatus controller MC. If IC card 32 is pulled out by hand from the receptacle frame 23, the detecting signal S3 of sensor RS will vary. For example, a completion signal S7 is sent from apparatus controller MC. If the completion signal S7 is sent, a power supply PW of apparatus controller MC is turned off. In addition, the processing of signals S1 to S7 is performed by a program of host controller HC and apparatus controller MC.

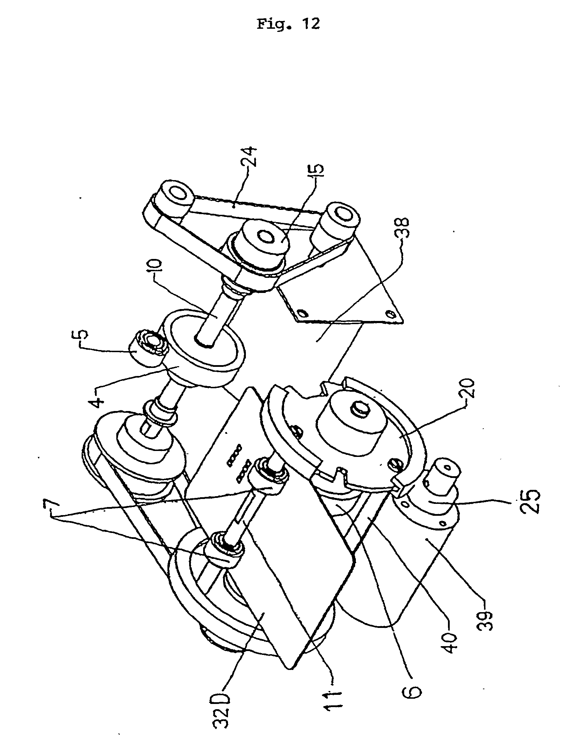

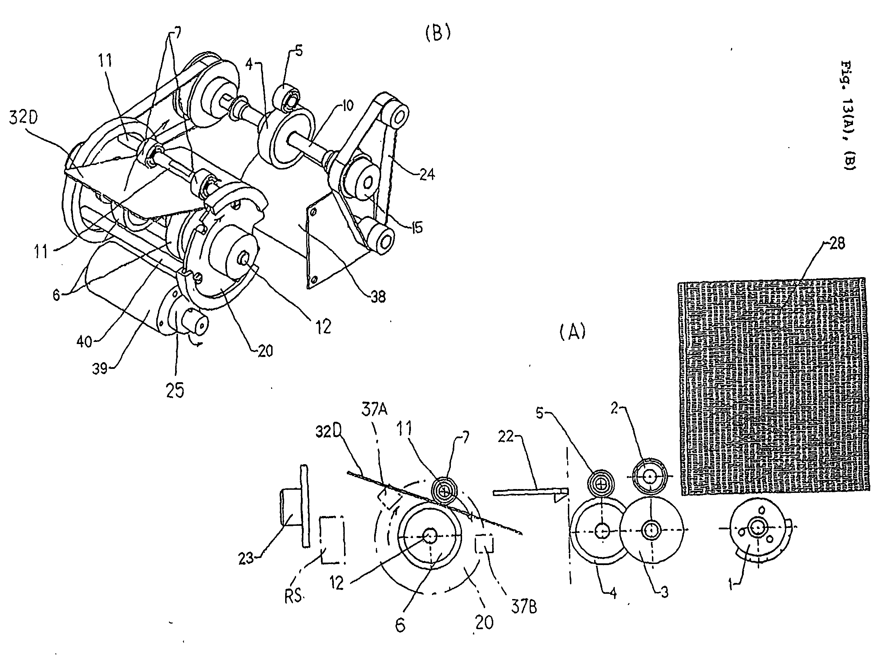

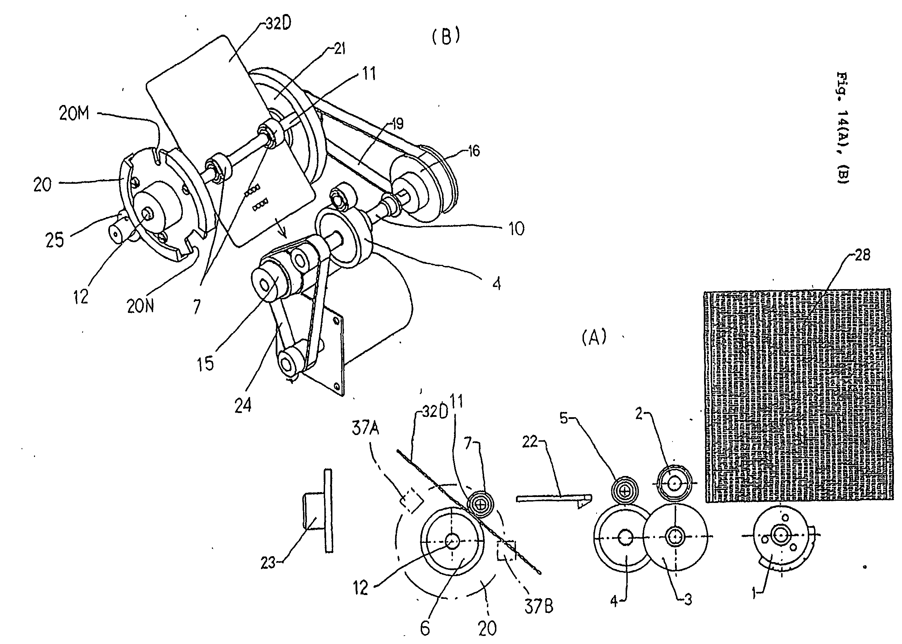

When the communication of host controller HC and IC card 32 is not successful, IC card 32 is collected, for example. In this case, the IC card 32 is not an excellent article, or the orientation of the IC card in the stack is not suitable such as the head and tail surfaces of the IC card 32 in the stack are reversed, or the top and bottom surfaces are turned over, etc.. At this time, a collecting signal S8 is sent to apparatus controller MC from host controller HC. When the collecting signal S8 is sent, the controller MC causes motor 38 to rotate forwardly. In this way, as shown in Fig. 9(A) and (B), an IC card 32D to be collected is sent in the direction toward receptacle frame 23 by rollers 6 and idlers 7. When IC card 32D to be collected is sent in the direction toward receptacle frame 23 and when the front end thereof is detected by sensor RS, motor 38 is stopped via detecting signal S3 (refer to Fig. 12). The motor 39 is actuated by the apparatus controller MC almost simultaneously. Since pinion 25 meshes with gear 20, shaft 12 is rotated forwardly. Consequently, shaft 11 of idlers 7 rotates around the rotation axis of rollers 6 (see Fig. 13(A) and (B)). Since IC card 32D is pinched by rollers 6 and idlers 7, the IC card 32D is inclined about 40 degrees form the horizontal (see Fig. 14(A) and (B)). At this time, a sensor 37B detects the large notch 20N of gear 20. The rotation of pinion 25, i.e. of motor 39 is stopped via a detecting signal S9. Almost simultaneously a reverse rotation of motor 38 is performed, and a reverse of rotation of rollers 6 is caused. IC card 32D is guided downwardly in the drawings (refer to Fig. 15(A) and (B)). Then a reverse rotation of motor 39 is performed, and, via pinion 25, gear 20, i.e. idlers 7 are returned to their original positions, as shown in Fig. 12. If idlers 7 are returned to their original positions, sensor 37A will detect a small notch 20M of gear 20. Via a detecting signal S10 of sensor 37A, the rotation of pinion 25, i.e. of motor 39 is stopped or reset to the original condition.

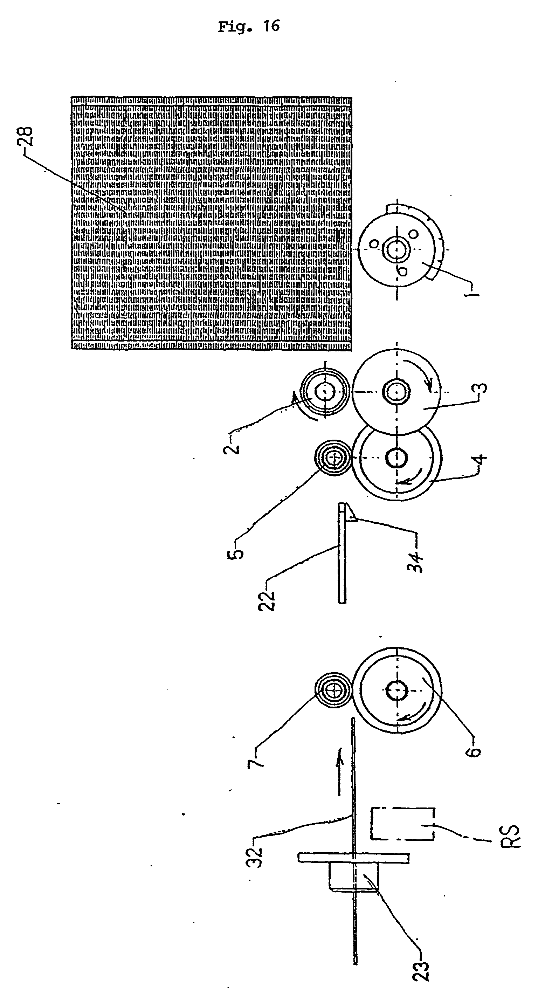

As shown in Fig. 16, if an IC card is inserted by hand into the inside of the apparatus through receiving frame 23, the front end of IC card 32 passes sensor RS, a detecting signal S3 will be processed by controller MC, and a signal S11 is reported to host controller HC. An acceptance signal S12 from host controller HC is sent to apparatus controller MC. If the acceptance signal S12 is received, controller MC will drive motor 38 with a reverse rotation. In this way, if the front end of IC card gets between rollers 6 and idlers 7, which perform the reverse rotation, IC card 32 will be further sent into the direction toward connector 22. When the front end of IC card 32, which is sent in the direction toward connector 22, hits the hook 34, connector 22 is moved in the direction of the lowering diagonal. Therefore, having been shown in Fig. 10, the pads 33 of IC card 32 contact the contact (not shown) of connector 22.

Hereafter, when it is confirmed that the pads 33 of IC card 32 are completely connected to the contacts of connector 22, the rotation of rollers 6 is stopped in a way similar to that mentioned above. Consequently, the IC card 32 rests in the condition of being connected with a connector 22. Therefore, a data processing can be performed by host controller HC. After completion of the data communication of controller HC and IC card 32, the issue signal S6 is sent to the controller MC from controller HC. In response to receiving the issue signal S6, controller MC rotates forwardly motor 38 via drive circuit MD. In this way, similar to that described above as shown in Fig. 11, IC card 32 reaches receiving frame 23. As the result, the preparation for an extraction by hand is completed.

When the communication of host controller HC and IC card 32 is not successful, the IC card 32 is collected. In this case, as described above, the collecting signal S8 is sent to apparatus controller MC from host controller HC. In response to receiving the collecting signal S8, apparatus controller MC rotates forwardly motor 38. When IC card 32D is sent in the direction toward receiving frame 23 and its front end is detected by sensor RS, motor 38 is stopped (see Fig. 12). Almost simultaneously, motor 39 is actuated by the apparatus controller MC and the gear 20 is rotated forwardly around shaft 12. Since IC card 32D is pinched between rollers 6 and idlers 7, it is inclined about 40 degrees from the horizontal (see Fig. 14(A) and (B)). At this time, sensor 37B stops the rotation of pinion 25, i.e. motor 39 via detecting signal S9.

Almost simultaneously, a reverse rotation of rollers 6 is performed, and IC card 32D is guided to a lower place in the drawing (refer to Fig. 15(A) and (B)). Then, a reverse rotation of motor 39 is performed, and, as shown in Fig. 12, gear 20, i.e. idlers 7, is returned to the original position. If idlers 7 are returned to the original positions, sensor 37A will detect the small notch 20M. The rotation of motor 39 is stopped via a detecting signal of S10 of sensor 37A, and it is reset to the original condition.

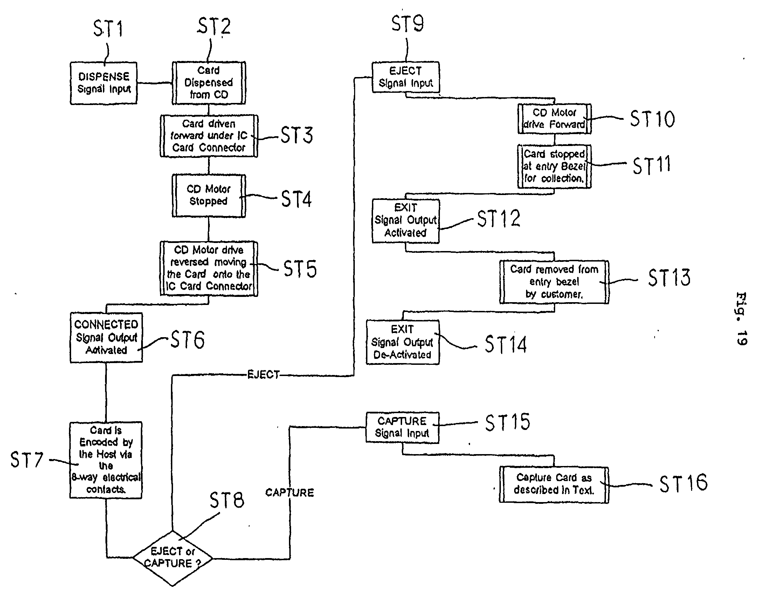

Fig. 19 and 20 are flowcharts of an operation of the above-mentioned embodiment. For an explanation of the above-mentioned operation, an outline explanation of the flowcharts is given.

If drawing signal (dispense signal) S1 for an IC card 32 is sent from host controller HC (step ST1), the lowest of the IC cards in stack 28 will be drawn out by roller 1 (step ST2). The rotating rollers 6 and idlers 7 perform the pick-up of the front end of this IC card 32. IC card 32 is sent in the direction toward receiving frame 23 (step ST3).

If sensor RS detects the front end of IC card 32, motor 38 will perform a reverse rotation because of signal S3 (step ST4 and step ST5). The IC card 32 is connected to connector 22 by the reverse rotation of motor 38. The leading edge of connector 22 turns ON the switch MS. If switch MS is turned ON, apparatus controller MC sends a connection signal S5 to host controller HC (step ST6). Consequently, IC card 32 rests in the condition of being connected with connector 22.

In the connection state, host controller HC encodes the chip in IC card 32 (step ST7). When the communication of host controller HC and IC card 32 is completed (step ST8), the issue signal S6 is sent to apparatus controller MC from host controller HC (step ST9). If the issue signal S6 is sent, apparatus controller MC forwardly rotates motor 38 via the drive circuit MD (step ST10). In this way, IC card 32 reaches receiving frame 23 by the action of rollers 6 and idlers 7 (step ST11).

At this time, the detecting signal S3 of sensor RS is sent to the apparatus controller MC, and the completion signal S7 is further sent from apparatus controller MC (step ST12). When the IC card 32 is pulled out of receiving frame 23, it is stopped to send the completion signal S7. The entire apparatus returns to the original state (steps ST13 and ST14).

When the communication of host controller HC and IC card 32 is not successful, the IC card 32 is collected (step ST8). At this time, the collecting signal S8 is sent to the apparatus controller MC from host controller HC (step ST15). If the collecting signal S8 is sent, IC card 32D is guided downwardly in the apparatus, as described before (step ST16).

If receiving signal S12 is sent from host controller HC to apparatus controller MC (step ST 21), an IC card 32 is inserted into the inside of the apparatus through receiving frame 23 (step ST22). Consequently, if an IC card 32 is inserted, controller MC will drive motor 38 with a reverse rotation (step ST 23). IC card 32 is connected to connector 22 by the reverse rotation of motor 38, and the leading edge of connector 22 turns ON switch MS. If switch MS is turned ON, apparatus controller MC sends the connection signal S5 to host controller HC (step ST24). In this way, IC card 32 rests in the condition of being connected with the connector 22, and the communication is performed between host controller HC and IC card 32 (step ST25).

After the communication of controller HC and IC card 32 is completed, the issue signal S6 is sent to apparatus controller MC from host controller HC (step ST27). If the issue signal S6 is sent, apparatus controller MC rotates forwardly motor 38 via drive circuit MD (step ST28). Consequently, IC card 32 reaches receiving frame 23, therefore, the preparation for an extraction by hand is completed, as described before (step ST29).

At this time the detecting signal S3 of sensor RS is sent to the apparatus controller MC. The completion signal S7 is further sent from the apparatus controller MC (step ST30). If IC card 32 is pulled out from receiving frame 23, the sending of completion signal S7 is stopped. Therefore, the entire apparatus turns to the original condition (steps ST31 and ST32).

When the communication of host controller HC and IC card 32 is not successful, the IC card 32 is collected. At this time, the collecting signal S8 is sent to the apparatus controller MC from host controller HC (step ST33). If the collecting signal S8 is sent, IC card 32D is guided downwardly in the apparatus, as described before (step ST34).

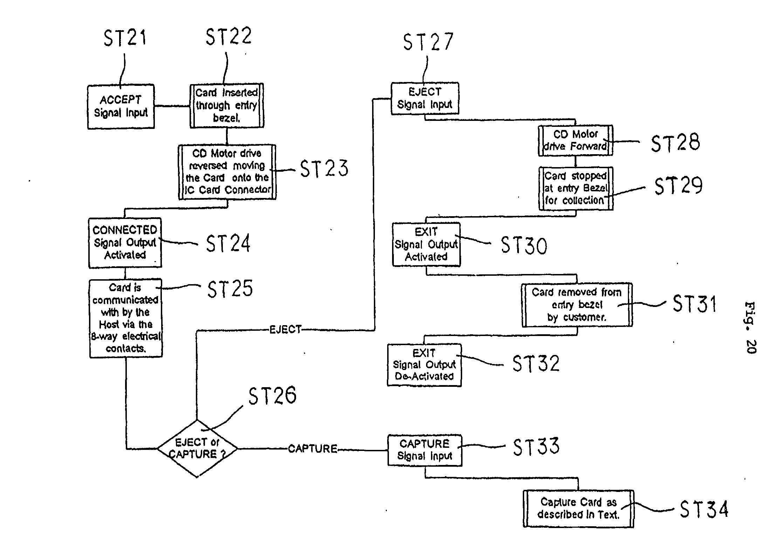

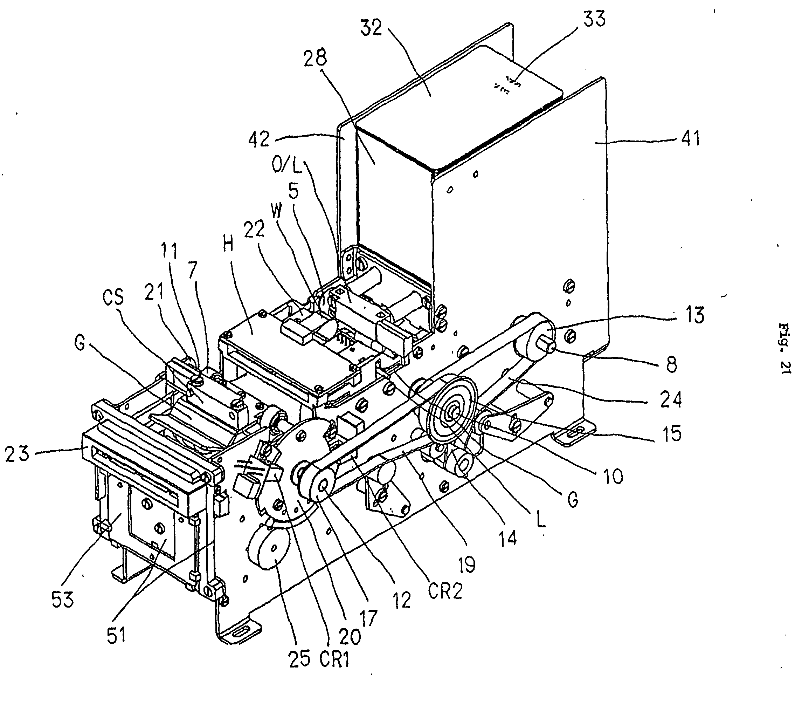

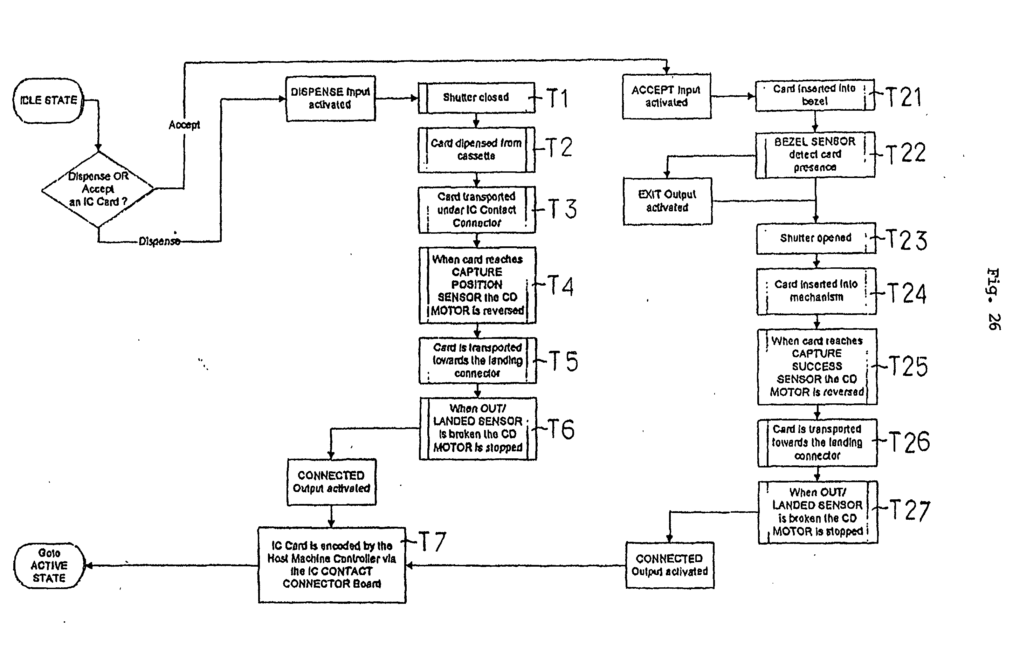

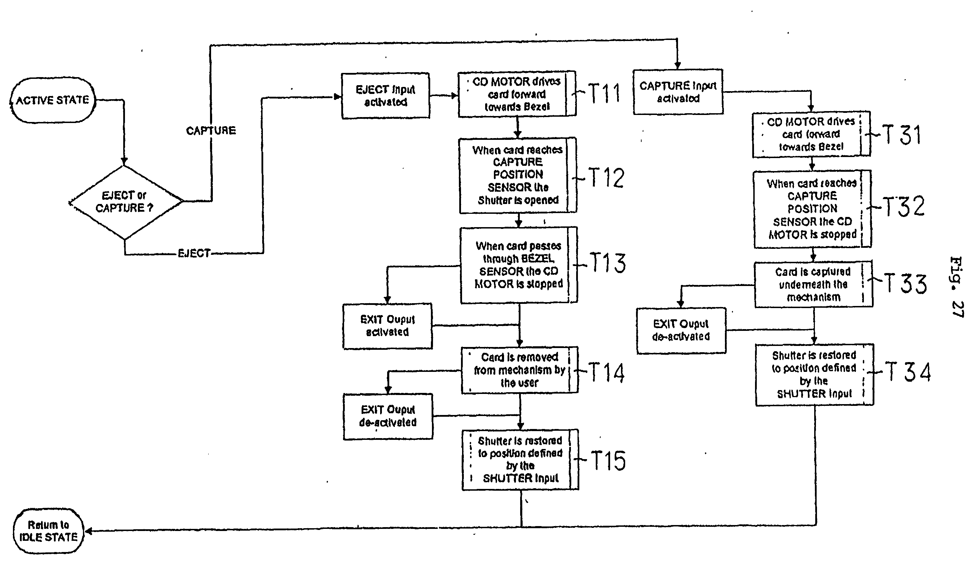

Hereafter, the second embodiment is explained referring to Fig. 21 and 27. Referring to Fig. 21, a pair of large L-shaped boards are sideboards 41 and 42, which comprise the apparatus. The upper-right part between the sideboards 41 and 42 contains a stack 28. The stack 28 consists of many IC cards 32 in the shape of a pillar. Each IC card 32 embeds a thin integrated circuit chip, i.e. an IC chip (not shown), in a proper place. Pads 33 for connecting the IC chip are formed on the surface of IC card 32. In this embodiment the number of pads of 33 is eight. However, other numbers of pads 33 are possible. Between the sideboards 41 and 42 an electric motor 38 with gear is built in. The electric motor 38 is used for drawing an IC card 32 (see Fig. 22). On a rotation shaft which is an output shaft of the electric motor 38, a pulley 14 is installed.

Shown at the upper right of Fig. 2 is a roller 1 for drawing out an IC card 32 under stack 28 for sending the same in a transport direction. The roller 1 is installed rotatably on a shaft 8, and it has a clutch mechanism at one side thereof. The shaft 8 is provided with a clutch 8C (see Fig. 22) of a pulley type with a groove. The clutch 8C performs the same movement as the shaft 8. The clutch 8C can be coupled to the roller 1 freely by operation -of a solenoid SL1 (refer to Fig. 24) via an arm (not shown) which can fit into the groove.

Moreover, a pulley 13 is installed at the end part of shaft 8. In addition, a sensor EM, which is arranged near the roller 1, detects whether the IC card 32 was lost, i.e. was drawn out (refer to Fig. 24). The sensor EM detects a pendulum, which is run by weight when an IC card 32 is drawn out from stack 28.

A pair of rollers 4 are arranged near the roller 1 in transport direction for sending out or transporting an IC card 32 drawn out from under the stack 28 (refer to Fig. 22). In addition, the rollers 4 for sending out the IC card 32, which is drawn out are rotatably arranged to the apparatus via a long shaft 10. A pulley 15 with a step is installed on the right end part of shaft 10. Moreover, above the rollers 4 for the sending out IC cards, small idlers 5 for pushing an IC card are arranged rotatably, respectively. A belt 24 spans the pulley 14 of the electric motor 38 of the drive source, the pulley 13, and the small diameter part of the pulley 15 with the step.

Shown in the left center of Fig. 22 is a pulley 17. A belt 19 spans the pulley 15 and the large diameter part of the pulley 17 with the step.

The pulley 17 is installed on one end part of shaft 12. At the center of shaft 12, a pair of rollers 6 for moving the IC card 32 are installed. Also, a large diameter gear board 20 is rotatably installed on the shaft 12 at the side of pulley 17. Furthermore, on the other end part of shaft 12, a rectangle board flange 21 is rotatably installed. The gear board 20 and the flange 21, which are a pair, are respectively arranged on the exterior of sideboards 41 and 42 (see Fig. 21).

Moreover, a shaft 11 is fixed between the gear board 20 and the flange 21. On the shaft 11, a pair of small idlers 7 for pressing the IC card 32 are rotatably installed, responding to the pair of rollers 6. Furthermore, rods 40 for reinforcement are coupled between the gear board 20 and the flange 21 (refer to Fig. 22). Moreover, on the shaft 11, a guide G is attached, which is a bent rectangle board (refer to Fig. 21). The guide G guides the IC card 32 from a receiving frame 23 onto the rollers 6.

Shown in the lower left of Fig. 22 is a small electric motor 39. The electric motor 39 is a drive source for collecting IC cards 32 of inferior quality inside the apparatus, for example. A pinion 25 is installed on the rotation shaft of electric motor 39. The pinion 25 meshes with gear board 20 having the large diameter.

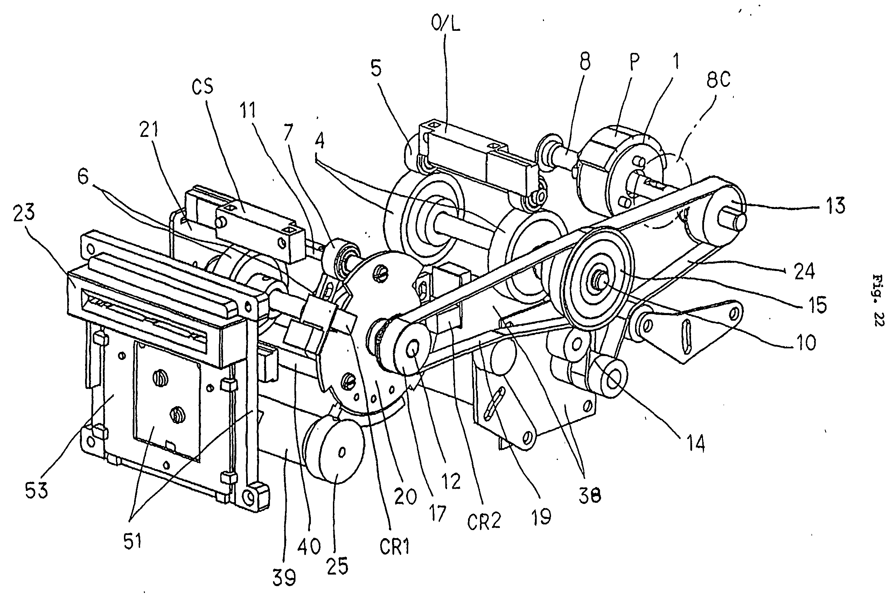

A rectangular cover plate 51 is fixed between the left ends of sideboards 41 and 42 (refer to Fig. 21). At the upper part of cover plate 51, an oblong slit 52 is provided through which an IC card 32 can pass (refer to Fig. 23). Furthermore, on the outside surface of cover plate 51, a square-ringshaped shutter 53 is arranged vertically movable via a spring (not shown). The shutter 53 opens and closes the slit 52 for passing an IC card 32. At the upper part of cover plate 51, the receiving frame 23 of an oblong square-ring type is fixed.

The receiving frame 23 guides an IC card 32 to be inserted in the apparatus into and within the apparatus. The oblong rectangular-shaped member in Fig. 21 is a housing H. Within the housing H, a connector 22 for an IC card 32 is movably contained. That is, the connector 22 of a board shape is contained within housing H slidably in about horizontal direction and rotatably upward (see Fig. 24).

Concretely, two small grooves GR are formed in each side of housing H (refer to Fig. 21. ). Each small groove GR at the side of stack 28 has about L shape. Each small groove GR at the side of receiving frame 23 has a low L shape. The connector 22 has a plurality of small protrusions L on each side (refer to Fig. 24). Each protrusion L at the side of stack 28 is long. Each protrusion L at the side of receiving frame 23 is short. On the outer end of long protrusion L, a spring (not shown) for returning the connector 22 is hooked.

A pair of small hooks 34 are respectively formed on the undersurface of connector 22, one on each angular part at the side of stack 28 (see Fig. 24). These hooks 34 hook the two angular parts of one end of an IC card 32. At the undersurface of connector 22, contacts C are arranged, for instance eight (refer to Fig. 24). The contacts C are connected to the upper part of housing H via flexible wires W (see Fig. 21). In other words, the connector 22 of board shape has a connection board with the contacts C.

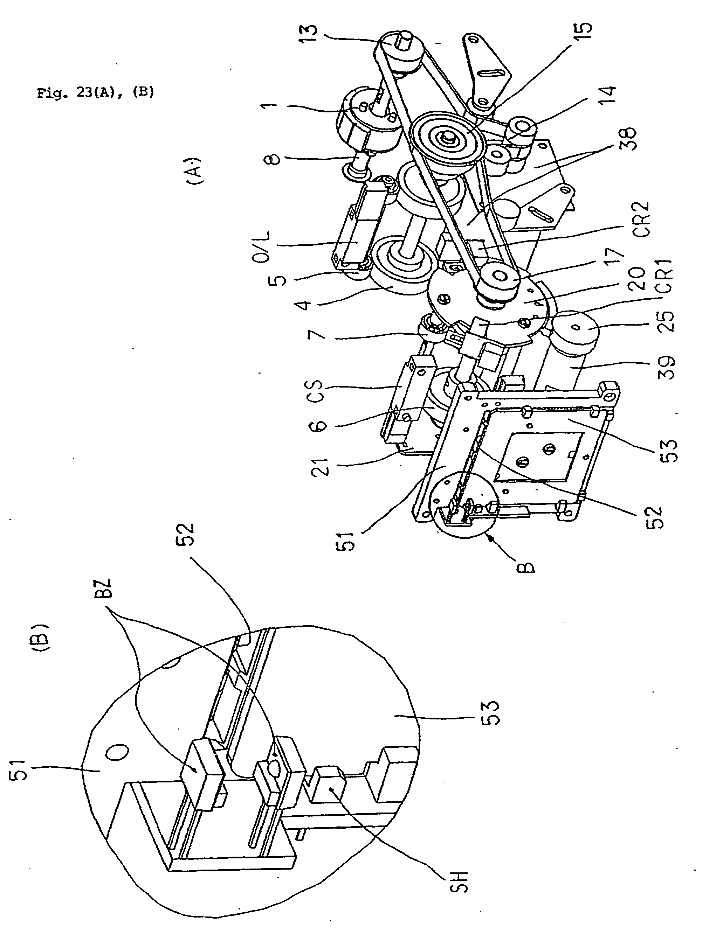

Fig. 25 is a block circuit diagram of the second embodiment shown in Fig. 21. Shown in the left of Fig. 1 is a controller HC of a host machine (not shown). As shown in Fig. 25, a controller MC of the apparatus is connected to the host controller HC. The apparatus controller MC connects the electric motor, the solenoid and the sensors shown in Fig. 24, respectively. Only the connector 22 is connected to the host controller HC.

The electric motors 38 and 39, respectively, can perform forward and reverse rotations via a drive circuit MD. Solenoids SL1 and SL2 are respectively operated via a drive circuit SD.

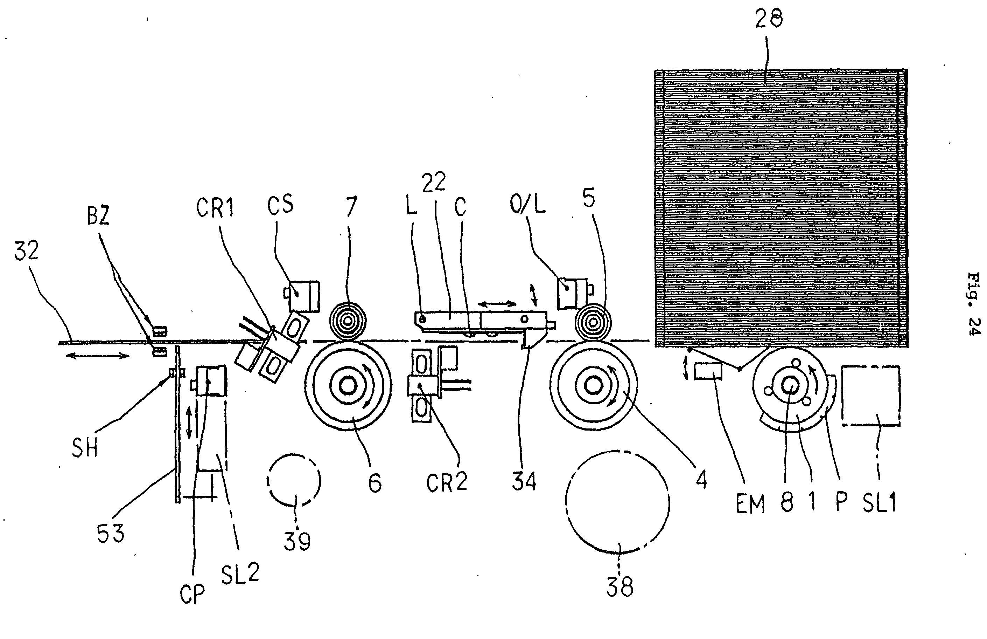

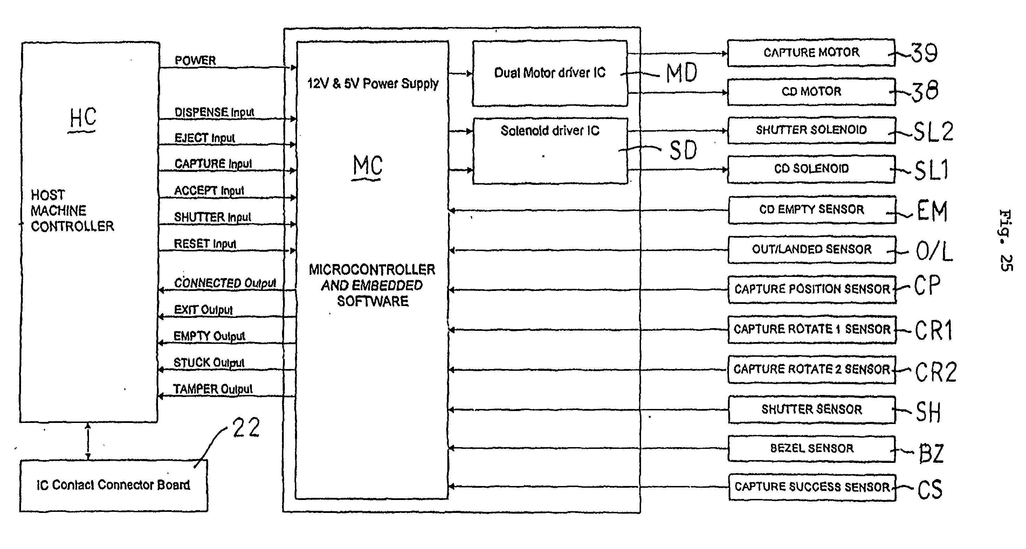

An operation of the second embodiment which has the above-mentioned structure is explained referring to Fig. 26 and 27. If the send-out (dispense) signal for sending out an IC card 32 is sent from host controller HC, solenoid SL2 will be operated. Therefore, the shutter 53 closes the slit 52 (step T1).

In the meantime, the electric motor 38 performs a forward rotation and the pulley 14 is rotated. The pulley 15 and the pulley 13 are correspondingly rotated via belt 24. On the other hand, solenoid SL1 is operated and the roller 1 is rotated via the resulting acting of clutch 8C (refer to Fig. 24).

Consequently, the IC card 32 at the bottom of stack 28 is drawn out by a projection P of roller 1 (step T2). The front end of IC card 32, which is drawn out by projection P, is sent toward and between rollers 4 and idlers 5. The IC card 32 which was picked-up by rollers 4 and idlers 5, is further sent in the direction of connector 22. Solenoid SL is turned OFF at this time. In this way, clutch 8C detaches, and roller 1 is not rotated anymore although the shaft 8 is still rotated.

The front end of IC card 32 sent by rollers 4 and idlers 5 hits the hooks 34 of connector 22 (step T3). At this time, the hooks 34 of connector 22 will be moved upward a little against the action of the spring (refer to Fig. 24). Therefore, the IC card progresses in the transport direction and the front end of the IC card 32 is picked-up by rollers 6 and idlers 7. The IC card 32, which was picked-up, is further sent in the (transport) direction toward shutter 53 by rollers 6 and idlers 7.

After the IC card 32 passed hooks 34 and the front end is detected by a position sensor CP, a reverse rotation of electric motor 38 is initiated (step T4). Rollers 6 and idlers 7 are reversely rotated by the reverse rotation of electric motor 38 and the IC card 32 is returned in the direction toward hooks 34, i.e. opposite to the transport direction (step T5). The returned IC card 32 striking hooks 34 moves the connector 22 in the direction toward stack 28 and nearly diagonal downward against the action of the spring (refer to Fig. 24). Consequently, the pads 33 of IC card 32 contact the contacts C of connector 22.

The leading edge of connector 22 is detected by a sensor OIL simultaneously. If the detection is confirmed, the rotation of rollers 6, i.e. of electric motor 38 is stopped (step T6). In the meantime, the detection signal of sensor O/L is sent to the host controller HC via apparatus controller MC. That is, it is confirmed that the pads 33 of the IC card 32 are connected to the contacts C of connector 22.

The data processing for IC card 32 is performed in this condition (step T7). That is, via the connector 22, data is written in and read out the chip (not shown) in IC card 32 by host controller HC. If the data communication of host controller HC and IC card 32 is completed successfully, a signal will be sent from host controller HC to apparatus controller MC. After receiving the signal, the apparatus controller MC initiates a forward rotation of electric motor 38 via drive circuit MD. Consequently, the IC card 32 is again sent in the transport direction toward shutter 53 by rollers 6 and idlers 7 (step T11). The connector 22 is returned to its original position by the spring (not shown) at this time.

If the IC card 32 sent in the direction toward shutter 53 is detected by sensor CP, shutter 53 will be opened via solenoid SL 2 (step T12). When IC card 32 passes slit 52 and is detected by sensor BZ the electric motor 38 is stopped (step T13). In this condition, if the IC card 32 is pulled out by fingers from receiving frame 23, the sensor BZ will be operated as well (step T14). Then, for example, the shutter 53 closes the slit 52 (step T15). The above-mentioned process is performed by the program of controllers HC and MC.

The case, where an IC card 32 is inserted into the apparatus through the receiving frame 23 (step T21), is described now. The front end of the IC card 32 is detected by sensor BZ (step T22) and the shutter 53 is opened (step T 23). In this way, the IC card 32 is inserted into the apparatus through slit 52 (step T24).

If the inserted IC card 32 is detected by a sensor CS for confirming the accepting and the accepting is confirmed, the electric motor 38 will perform a reverse rotation (step T25). Reverse rotations of rollers 6 and idlers 7 are caused by the reverse rotation of electric motor 38, and the picked-up IC card 32 is sent in the direction toward hooks 34 (step T26). When the IC card 32 strikes hooks 34, the connector 22 is moved in the direction toward stack 28 and in the nearly lower diagonal direction against the action of the spring (refer to Fig. 24). Consequently, the pads 33 of IC card 32 contact the contacts C of the connector 22.

The leading edge of connector 22 is detected by sensor O/L simultaneously. When the detection is confirmed, the rotation of rollers 6, i.e. of electric motor 38 is stopped (step T27).

After that the data processing for IC card 32 can be performed (step T7), and, for example, the process of step T11 to T15 is performed as described above.

When the communication of host controller HC and IC card 32 is not successful, the IC card 32 is collected. In this case, the IC card 32 is an article of inferior quality, or the orientation of IC cards 32 in the stack is not correct such as the head and tail surfaces of IC card 32 are reversed in the stack or the IC card is turned over. In this case, a collecting signal is sent out to apparatus controller MC from host controller HC.

If a collecting signal is given, a forward rotation of motor 38 will be initiated by apparatus controller MC. Consequently, the IC card 32 to be collected is sent in the direction toward receiving frame 23 by rollers 6 and idlers 7 (step T31). When the IC card 32 to be collected is sent in the direction toward receiving frame 23 and its front end is detected by position sensor CP, the electric motor 38 is stopped (step T32). Almost simultaneously, the electric motor 39 is operated by apparatus controller MC and the pinion 25 causes a forward rotation of shaft 12 through the gear 20. Consequently, the shaft 11 of idlers 7 rotates relative to rollers 6.

Since the IC card 32 is pinched between the rollers 6 and the idlers 7, the IC card 32 is inclined about 40 degrees from the horizontal (not shown) as in the first embodiment. At this time, a sensor CR2 detects an edge notch of gear 20, and the rotation of electric motor 39 is stopped. Almost simultaneously, a reverse rotation of electric motor 38 is initiated, and thus a reverse rotation of rollers 6. The IC card 32 to be collected is guided downward (step T33) as in the first embodiment.

After this, a reverse rotation of electric motor 39 is initiated and performed until gear 20, namely idlers 7, is returned to its original position via pinion 25. If the idlers 7 are returned to their original positions, sensor CR1 will detect the edge notch of gear 20. When the sensor CR1 detects the notch, the rotation of electric motor 39 is stopped. The original condition is restored.

After this, the shutter 53 closes the slit 52 (step T34). In addition, a sensor SH of shutter 53 detects the opening and closing operation of shutter 53. Furthermore, of course the sensor O/L detects whether the IC card 32 is discharged from the stack 28.

The invention as described above adds an apparatus to a simple structure, which can reliably draw cards one by one. As a result the invention can data-process and issue IC cards. Therefore, a large effect is obtained.

In addition, the invention has an advantage, that an IC card inserted from the exterior of the apparatus can be data-processed and can be issued again. Moreover, this invention has another advantage, that several sheets of blank IC cards are stored and the IC cards can be issued. Moreover, this invention has another advantage that it can collect the IC card, if, for example, the configuration of IC card is wrong.

As mentioned above, by adding a simple structure to a card expenditure apparatus, this invention processes data and issues an IC card. In addition, this invention can perform a data processing for an IC card inserted from the exterior and can issue the IC card again. Furthermore, an IC card process machine according to this invention is provided with a simple structure, and the security is secured when the IC card is processed.

## Claims

1. An apparatus for processing IC cards, comprising at least
- opening means (23) for receiving or discharging an IC card (32);
- connector means (22) for connecting the IC card to perform a data processing for the IC card; and
- transfer means (6, 7) which is provided between the opening means and connector means,
and which comprises
at least a roller (6) and an idler (7) which is pressed against said roller for transferring said IC card (32) from said opening means to said connector means and from said connector means to said opening means, characterized in that
the shaft of said idler (7) is rotatable around the rotation axis of the roller for transferring said IC card to a collecting position.

2. The apparatus according to claim 1, further comprising
- drawing means (1, 4, 5) for drawing an IC card positioned at a specific position of a stack (28) of IC cards away from the stack.

3. The apparatus according to claim 2, characterized in that the specific position of the stack (28) is the position at the bottom or the exterior.

4. The apparatus according to one of claims 1 to 3, characterized by
- shutter means (53, SH, SL2) for opening and closing said opening means (23) to the outside of the apparatus.

5. The apparatus according to claim 4, characterized in that said shutter means (53, SH, SL2, CS, BZ) is adapted for detecting an IC card (32) inserted from the outside of the apparatus and for accepting the IC card for insertion into the inside thereof.

6. The apparatus according to claim 4 or 5, characterized in that
said shutter means (53, SH, SL2, CP, BZ) is adapted for detecting an IC card (32) moved by the transfer means to the opening means for discharge and for opening the opening means (23) for a passage of the IC card.

7. The apparatus according to one of claims 1 to 6, wherein the transfer means comprises
- collecting means (6, 7, 20, 39) for collecting an IC card (32D) which could not be processed at the collecting position in the inside of the apparatus.

## Patentansprüche

1. Gerät zum Bearbeiten von IC-Karten mit mindestens
- einem Öffnungsmittel (23) zum Empfangen oder Ausgeben einer IC-Karte (32);
- einem Verbindungsmittel (22) zum Verbinden der IC-Karte zum Ausführen einer Datenverarbeitung für die IC-Karte; und
- einem Übertragungsmittel (6, 7), das zwischen dem Öffnungsmittel und dem Verbindungsmittel vorgesehen ist und das aufweist
mindestens eine Rolle (6) und eine Riemenspannscheibe (7), die gegen die Rolle preßt, zum Übertragen der IC-Karte (32) von dem Öffnungsmittel zu dem Verbindungsmittel und von dem Verbindungsmittel zu dem Öffnungsmittel;
dadurch gekennzeichnet, daß die Welle der Riemenspannscheibe drehbar um die Drehachse der Rolle zum Übertragen der IC-Karte zu einer Sammelposition ist.

2. Gerät nach Anspruch 1, weiter mit
- einem Zugmittel (1, 4, 5) zum Ziehen einer IC-Karte, die an einer spezifischen Position eines Stapels (28) von IC-Karten positioniert ist, weg von dem Stapel.

3. Gerät nach Anspruch 2, dadurch gekennzeichnet, daß die spezifische Position des Stapels (28) die Position an dem Boden oder außerhalb ist.

4. Gerät nach einem der Ansprüche 1 bis 3, gekennzeichnet durch
- ein Verschlußmittel (53, SH, SL2) zum Öffnen und Schließen des Öffnungsmittels (23) nach außerhalb des Gerätes.

5. Gerät nach Anspruch 4, dadurch gekennzeichnet, daß das Verschlußmittel (53, SH, SL2, CS, BZ) ausgelegt ist zum Erfassen einer IC-Karte (32), die von der Außenseite des Gerätes eingeführt ist, und zum Akzeptieren der IC-Karte zum Einführen in das Innere davon.

6. Gerät nach Anspruch 4 oder 5, dadurch gekennzeichnet, daß das Verschlußmittel (53, SH, SL2, CP, BZ) ausgelegt ist zum Erfassen einer IC-Karte (32), die von dem Übertragungsmittel zu dem Öffnungsmittel zum Ausgeben bewegt wird, und zum Öffnen des Öffnungsmittels (23) für einen Durchgang der IC-Karte.

7. Gerät nach einem der Ansprüche 1 bis 6, bei dem das Übertragungsmittel aufweist
- ein Sammelmittel (6, 7, 20, 39) zum Einsammeln einer IC-Karte (32D), die nicht verarbeitet werden konnte, an der Sammelposition im Inneren des Gerätes.

## Revendications

1. Appareil pour traiter des cartes à circuit intégré, comprenant au moins
- un moyen d'ouverture (23) pour recevoir ou décharger une carte à circuit intégré (32) ;
- un moyen de connecteur (22) pour connecter la carte à circuit intégré pour effectuer un traitement de données pour la carte à circuit intégré ; et
- un moyen de transfert (6, 7) qui est disposé entre le moyen d'ouverture et le moyen de connecteur,
et qui comprend au moins un rouleau (6) et un galet-tendeur (7) qui est pressé contre ledit rouleau pour transférer ladite carte à circuit intégré (32) depuis ledit moyen d'ouverture audit moyen de connecteur et depuis ledit moyen de connecteur audit moyen d'ouverture,
caractérisé en ce que :
l'arbre dudit galet-tendeur (7) peut tourner autour de l'axe de rotation du rouleau pour transférer ladite carte à circuit intégré à une position de collecte.

2. Appareil selon la revendication 1, comprenant en outre :
- un moyen d'extraction (1, 4, 5) pour extraire une carte à circuit intégré positionnée à une position spécifique d'une pile (28) de cartes à circuit intégré hors de la pile.

3. Appareil selon la revendication 2, caractérisé en ce que la position spécifique de la pile (28) est la position au fond ou à l'extérieur.

4. Appareil selon l'une quelconque des revendications 1 à 3, caractérisé par un moyen d'obturateur (53, SH, SL2) pour ouvrir et fermer ledit moyen d'ouverture (23) à l'extérieur de l'appareil.

5. Appareil selon la revendication 4, caractérisé en ce que ledit moyen d'obturateur (53, SH, SL2, CS, BZ ) est adapté pour détecter une carte à circuit intégré (32) insérée depuis l'extérieur de l'appareil et pour accepter la carte à circuit intégré pour insertion dans celui-ci.

6. Appareil selon la revendication 4 ou 5, caractérisé en ce que
ledit moyen d'obturateur (53, SH, SL2, CP, BZ) est adapté pour détecter une carte à circuit intégré (32) déplacée par le moyen de transfert vers le moyen d'ouverture pour décharger et pour ouvrir le moyen d'ouverture (23) pour laisser passer la carte à circuit intégré.

7. Appareil selon l'une quelconque des revendications 1 à 6, dans lequel le moyen de transfert comprend
- un moyen de collecte (6, 7, 20, 39) pour collecter une carte à circuit intégré (32D) qui ne peut pas être traitée à la position de collecte à l'intérieur de l'appareil.
